# EUROPEAN PATENT SPECIFICATION

(11) **EP 1 320 496 B1**
(45) Date of publication and mention of the grant of the patent: **01.03.2006**
(21) Application number: 01968562.7
(22) Date of filing: 06.09.2001
(51) Int. Cl.: B65D 83/04, H01M 2/10

(54) **PRODUCT DISPENSER**
SPENDER FÜR MEDIEN
DISTRIBUTEUR D'ARTICLES

(30) Priority: 08.09.2000 US 658201; 18.01.2001 US 764579; 18.04.2001 US 837046
(43) Date of publication of application: 25.06.2003
(73) Proprietor: EVEREADY BATTERY COMPANY, INC., Westlake, Ohio 44145 (US)
(72) Inventor: GARRANT, Steven, S., Greenwich, NY 12834 (US); HEDMAN, Jonathan, W., Burnt Hills, NY 12027 (US); FERGUSON, Mark, A., Syracuse, NY 13219 (US); PIRRO, Jeffrey, P., Marcellus, NY 13108 (US); FURTH, David, A., Skaneateles, NY 13152 (US); CHAPMAN, Richard, H., Camillus, NY 13031 (US)
(74) Representative: Weber, Thomas
(86) International application number: PCT/US2001/027616
(87) International publication number: WO 2002/020371

(56) References cited:
- US-A- 3 394 796
- US-A- 3 437 236
- US-A- 3 633 792
- US-A- 5 477 981
- US-A- 6 039 185

## Description

### BACKGROUND OF THE INVENTION

The present invention relates to a dispenser for housing and dispensing product, such as miniature batteries including zinc air cells used in hearing aids. As used herein, "battery" means one or more cells.

Handling of miniature batteries is difficult because of their small size. Handling of miniature batteries is typically required in order to remove the batteries from their packaging, to insert the batteries in the proper orientation into a device, and, in the case of air cells, to remove any individual tabbing associated with the cell prior to use. Tabbing is normally associated with metal air cells such as zinc air cells, to limit the ingress of oxygen into the cell until such time as the cell is placed into service. The tab also functions to limit the transport of water vapor in or out of the cell and limits the ingress of carbon dioxide into the cell. Typically, the tab comprises an adhesive material covering one or more air ports. Upon removal of the tab, the ports are exposed to the oxygen of the ambient environment, thereby enabling the cell to be activated. The challenge of handling miniature batteries is exacerbated in the event the user suffers from reduced dexterity, poor vision or other physical infirmity.

Efforts to address some of these issues are found in the art. For example, U.S. Pat. No. 6,039,185 discloses a device for inserting a hearing aid battery into a hearing aid. The device comprises so-called "petals" with an air cell residing on each petal. The cells are individually tabbed, and each tab is then adhered to the petal. The cell is inserted into the hearing aid by gripping the inserter and bringing the appropriate petal up close to the hearing aid battery door to enable the cell to be engaged within the door. The cell is then separated from the inserter using a wiping motion, purportedly leaving the tab adhered to the petal. The method of separating the cell from its associated tab and the inserter as disclosed in the '185 patent places stresses on the hearing aid device, presenting the potential for damage to the device.

Typical packaging for miniature zinc air cells presents further problems. Common packaging for miniature zinc air cells is disclosed for example in US Pat. No. 4,953,700. The packaging disclosed therein consists of a thermoformed or molded blister rotatably attached to a paperboard card. The blister comprises multiple compartments each containing a battery. A battery is dispensed from the package by rotating the blister to align a loaded compartment with a trap door accessible in the back of the card. The trap door can come open during transport and batteries will fall out. The trap door becomes weak and ineffective after multiple uses. The base of the dial can also separate or pull away from the card allowing batteries to fall out. Finally, the consumer must still handle the battery to remove the tab, properly orient the cell in connection with the device terminals and insert the cell into the device once the battery has been removed from the package.

Some consumers use a separate tool to assist them in loading miniature batteries into devices. This tool consists of a magnet on the end of a wand. The tool can be easily misplaced and provides little aid in removing the individual tabbing associated with common zinc air cells.

Handling of other small products including but not limited to pharmaceuticals such as pills, foodstuff such as candy, hardware such as screws, and the like can be equally difficult because of their size, particularly for those users suffering from reduced dexterity, poor vision or other physical infirmity (see US-A-3 437 236). While the within invention is illustrated in connection with miniature cells, and in particular in connection with miniature zinc air cells, it will be appreciated that the within invention can also be utilized in connection with the transport, storage and dispensing of such other small products. As used herein, the term "product" is not limited to miniature cells or batteries, and fully comprehends such other small products as those identified above.

It is therefore a first object of the present invention to provide a product dispenser that acts as both a structural package for housing and transporting product and a dispenser for removing product from the package and an inserter for manipulating and orienting product into a device or other end use location.

It is also an object of the present invention to provide a product dispenser that removes any direct handling of product prior to its insertion into a device or other end use location.

It is a further object of the present invention to provide a product dispenser that obviates the need for direct handling of tab material in the case of a metal air cell such as a zinc air cell.

It is a further object of the present invention to provide a product dispenser that both activates and dispenses air cells such that the user does not have to handle the cells either before or after insertion into a device.

Another object of the present invention is to provide a product dispenser that eliminates the need for additional tools to handle and orient product for insertion or placement for end use.

Another object of the present invention is to provide a product dispenser that avoids unintended dispensing from the dispenser.

Another object of the present invention is to provide a refill base cartridge for a product dispenser.

Another object of the present invention is to provide a product dispenser that optionally allows the user to attach a refill base after removal of a spent base cartridge.

Another object of the present invention is to provide a product dispenser that allows the consumer to store used product for disposal or material recovery purposes.

The foregoing and additional objects of this invention will become fully apparent from the following description and the accompanying drawings.

### SUMMARY OF THE INVENTION

The present invention provides for a product dispenser that is easy to use for storing and dispensing product, such as miniature batteries. The dispenser of the within invention obviates the need to handle the product at any point during the dispensing process or during the insertion or placement process of the product for its end use. To achieve this and other advantages, and in accordance with the purposes of the present invention as embodied and described herein, the present invention provides for a product dispenser according to claim 1.

In another embodiment, the cover further comprises a rib. The rib is secured to the inner surface of the roof such that when the cover is assembled with the base, the product is under pressure from the rib allowing the rib to further secure the product to the base during transport and storage. In another embodiment, the rib functions to apply pressure so as to seal an air cell to a gasket prior to dispensing.

In another embodiment, the cover is removably attached to the base allowing the base to be disposed of and a replacement base with additional product to be joined with the cover.

In another embodiment the bottom side of the base comprises a storage area for storing used product for disposal or material recovery purposes. The entire dispenser could be processed for material recovery or otherwise recycled. In the event the cover and the base are separable, the base alone could be processed for material recovery or otherwise recycled.

In another embodiment the cover is made of see-through material and the push element or base or both can be color coded to indicate various product characteristics, such as size.

These and other features, advantages, and objects of the present invention will be further understood and appreciated by those skilled in the art by reference to the following specification, claims, and appended drawings.

### BRIEF DESCRIPTION OF DRAWINGS

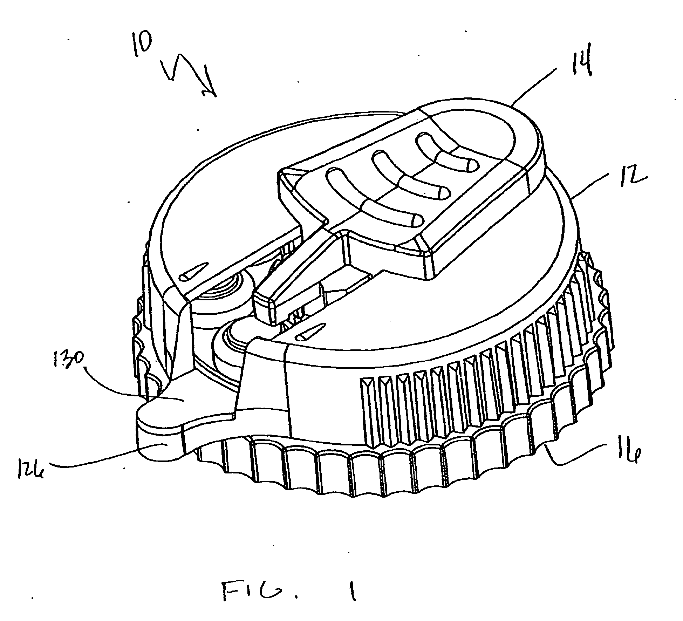

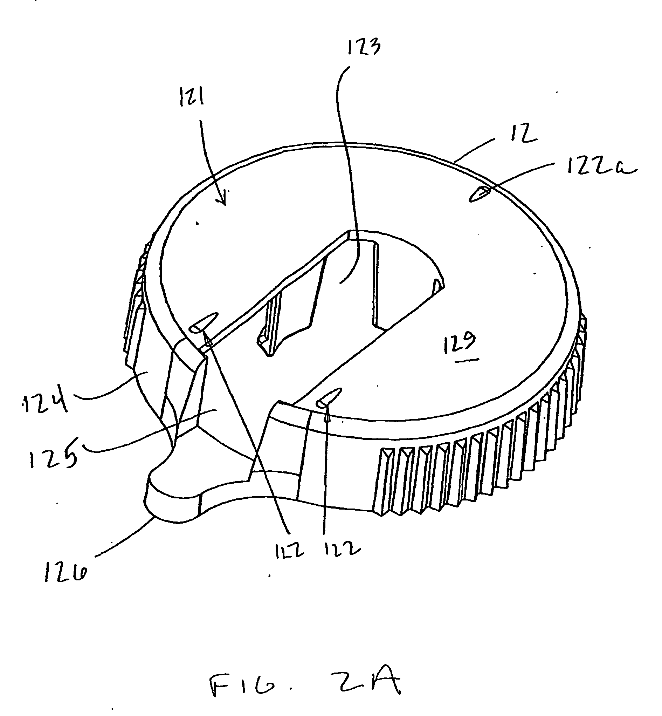

FIGURE 1 is a view of a product dispenser according to the within invention.
FIGURE 2A is a view of a cover of a product dispenser according to the within invention.
FIGURE 2B is another view of the cover of Figure 2A.
FIGURE 2C is a view of an alternate cover of a product dispenser according to the within invention.

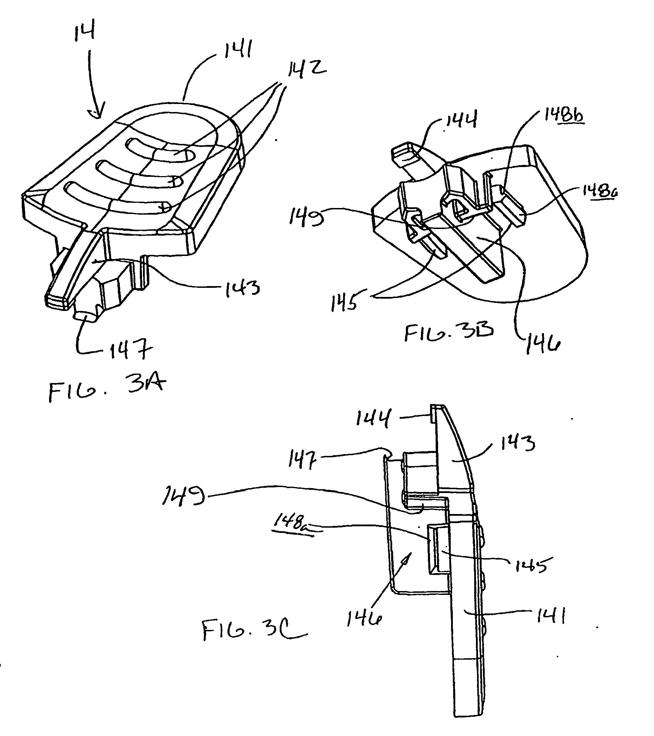

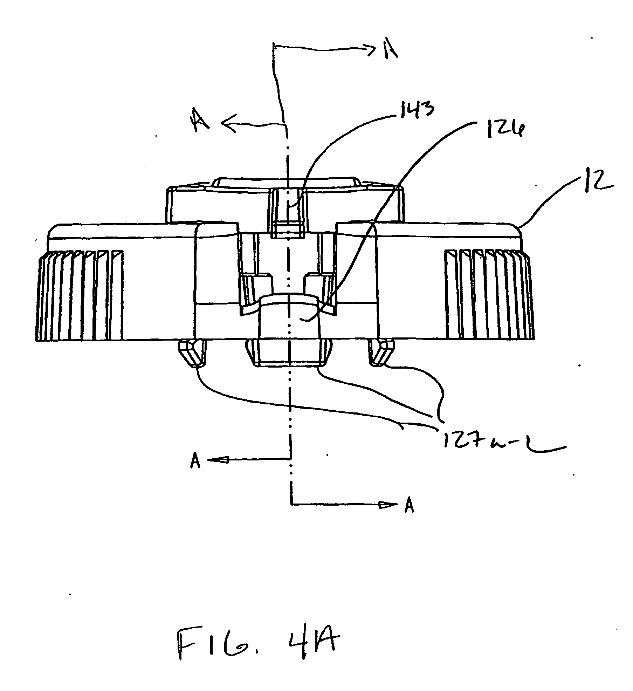

FIGURE 3A is a view of a push element of a product dispenser according to the within invention.
FIGURE 3B is another view of the push element of Figure 3A.
FIGURE 3C is a side view of the push element of Figures 3A and 3B.
FIGURE 4A is a front view of a cover and push element of a product dispenser according to the within invention.
FIGURE 4B is a section view of the cover and push element of Figure 4A.

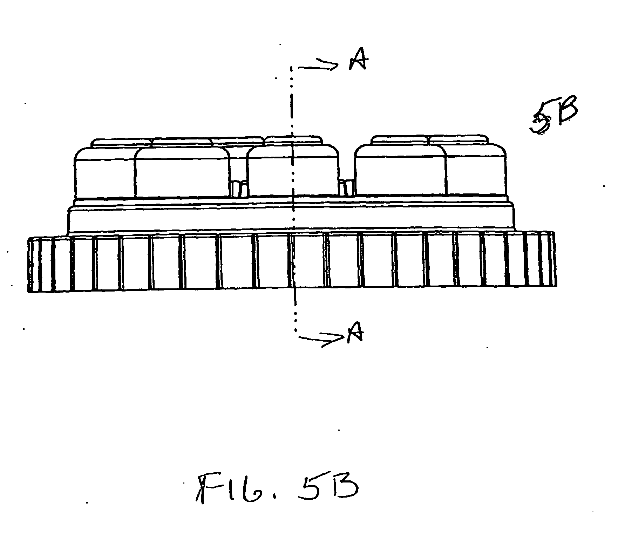

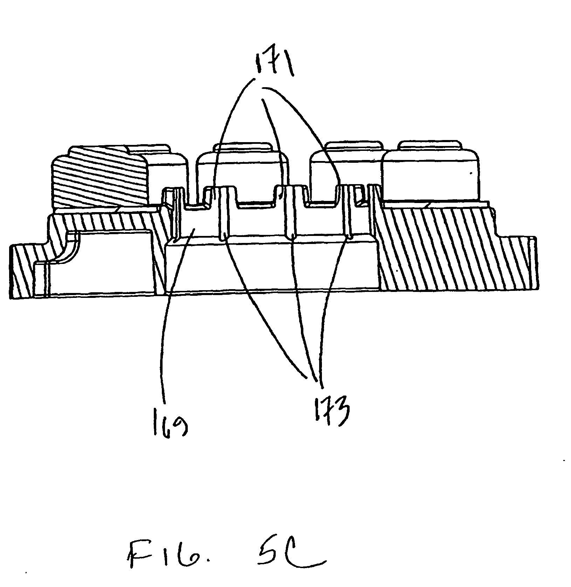

FIGURE 5A is a view of a base of a product dispenser according to the within invention.
FIGURE 5B is a side view of the base of Figure 5A.
FIGURE 5C is a section view of the base of Figure 5B.
FIGURE 5D is another view of the base of Figure 5A.

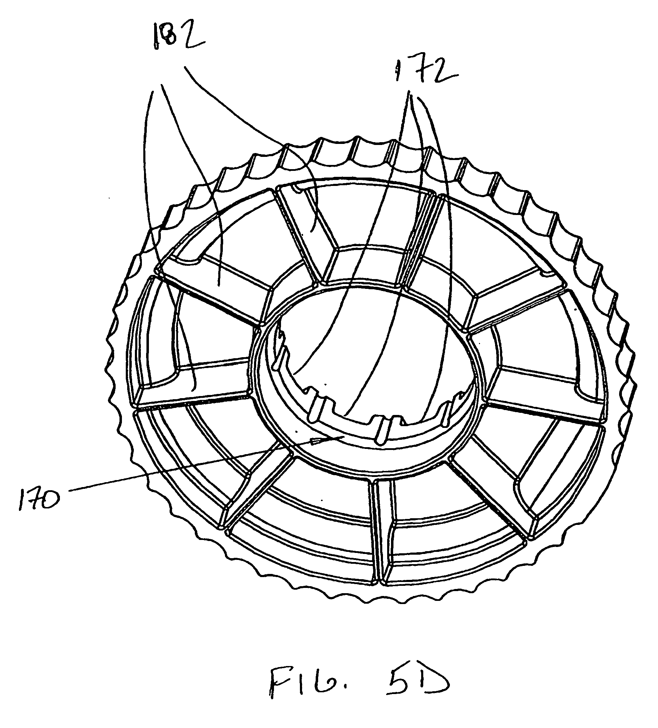

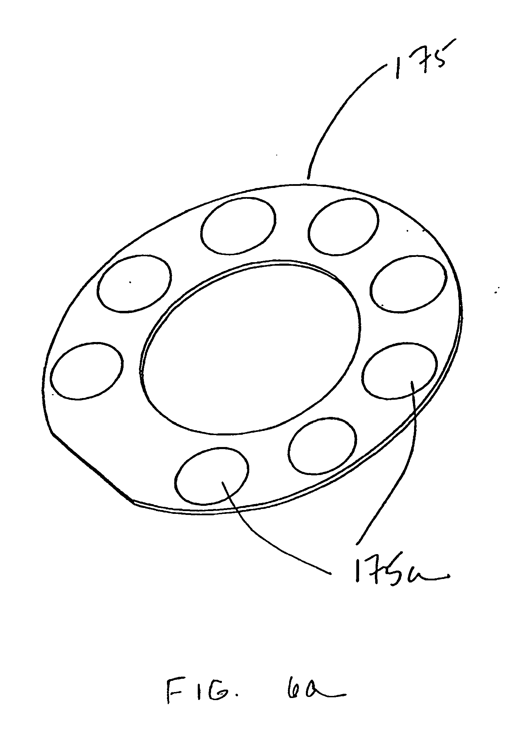

FIGURE 6A is a view of a platform of a product dispenser according to the within invention.
FIGURE 6B is a side view of a platform of a product dispenser according to the within invention.
FIGURES 7A, 7B and 7C illustrate an alternate base of a product dispenser according to the within invention.
FIGURE 8 illustrates another alternate base of a product dispenser according to the within invention.
FIGURE 9 is an exploded view of an alternate embodiment of a product dispenser according to the within invention.
FIGURE 10A is a view of a cover of the product dispenser of Fig. 9.
FIGURE 10B is another view of the cover of Fig. 10A.
FIGURE 11 is a view of a base platform of the product dispenser of Fig. 9.
FIGURE 12 is a view of one layer of the adhesive product platform of the product dispenser of Fig. 9.
FIGURE 13A is a view of a push element of the product dispenser of Fig. 9.
FIGURE 13B is another view of the push element of Fig. 13A.
FIGURE 14A is a view of a base ring of the product dispenser of Fig. 9.
FIGURE 14B is another view of the base ring of Fig. 14A.
FIGURE 15 is a view of the product dispenser of Fig. 9.
FIGURE 16A is a view of an alternate embodiment of the push element of a product dispenser of Fig. 9.
FIGURE 16B is another view of the push element of FIG. 16A.
FIGURE 17A is a view of an alternate embodiment of the cover of a product dispenser of Fig. 9.
FIGURE 17B is another view of the cover of FIG. 17A.

### DETAILED DESCRIPTION OF THE PREFERRED EMBODIMENTS

The specific embodiments illustrated in the appended drawings and described in the following specification are simply exemplary embodiments of the invention defined in the appended claims. Hence, specific dimensions and physical characteristics relating to specific embodiments disclosed herein are not to be considered as limiting, unless the claims expressly state otherwise.

The dispenser 10 of the within invention comprises a cover 12, a retractable push element 14, and a base 16. The cover 12 and the base 16 are connected such that each can be rotated about a common axis with respect to the other. That is, the cover can be rotated while maintaining the base in a stationary position, or, conversely, the base can be rotated while maintaining the cover in a stationary position.

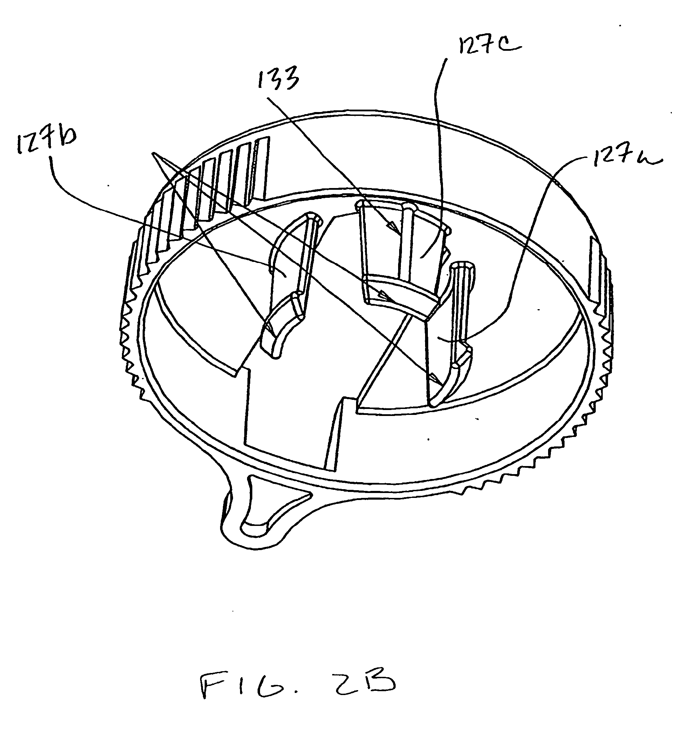

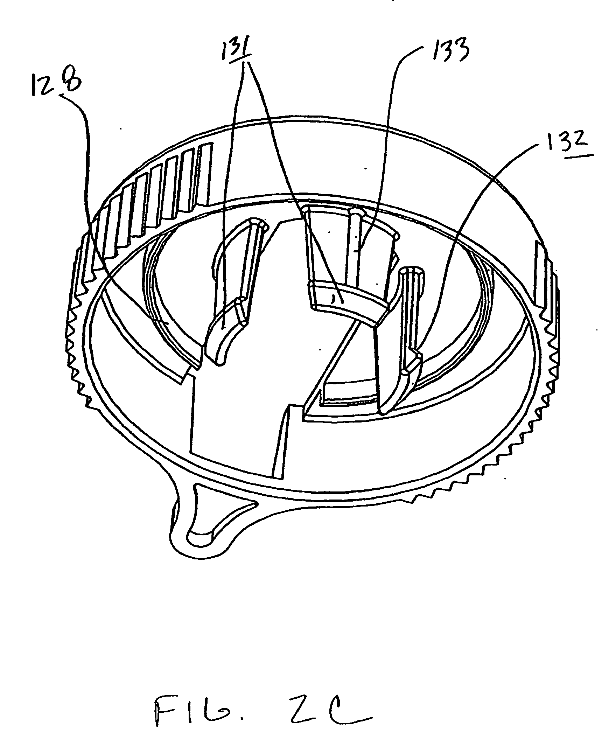

The rotatable cover 12 comprises a roof 121, roof ramps 122, a roof opening 123, a wall 124, a wall opening 125, a landing 126, and flexible snap-hook connectors 127a, 127b and 127c. In a preferred embodiment, the cover 12 is made from a readily-available, polycarbonate-based material such as Lexan® 143R resin manufactured by GE Plastics and available from Polymerland Service Center, Pittsburgh, PA 15264. It should be appreciated that other durable materials may be used in producing the cover 12. In addition, the cover 12 may further include a rib 128 as shown in figure 2C.

The roof ramps 122 protrude from the outer surface 129 of the roof 121 adjacent to the roof opening 123. The roof ramps 122 are angled protrusions that frictionally engage the push element 14 and create a transitional stopping action for the push element as it is extended. The ramps 122 aid in providing a fluid and controlled motion for the push element 14 that encourages controlled movement of product toward the landing 126. The ramps 122 also aid in maintaining the push element in a fully extended position. Alternatively, a third roof ramp 122a may be positioned on the outer surface 129 of the roof 121 such that the third roof ramp aids in keeping the push element in place while fully retracted. It will be appreciated that a wide variety of shapes and locations can be utilized for the roof ramps without departing from the teachings of the within invention.

The roof opening 123 is coincidental with the wall opening 125 and the landing 126 is secured to the cover 12 at a location adjacent to the wall opening 125. Product passes through the wall opening 125 from the interior of the cover 12 onto the landing 126. Product aligned at the wall opening 125 for such transition is said to be located in the product dispensing position.

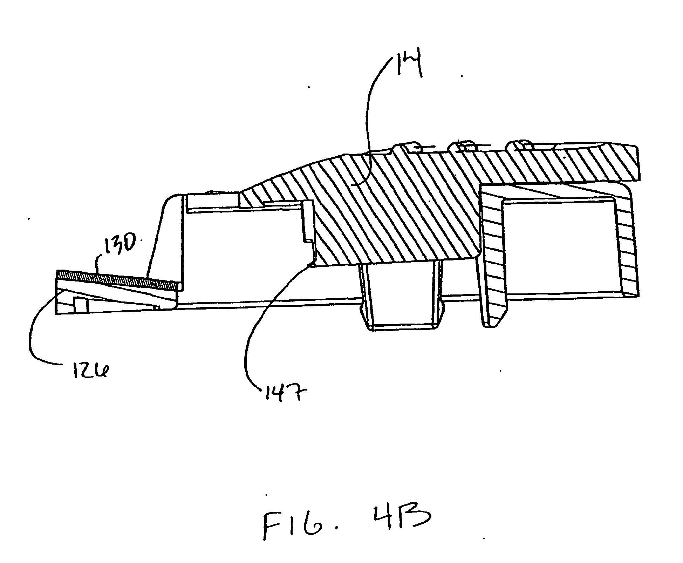

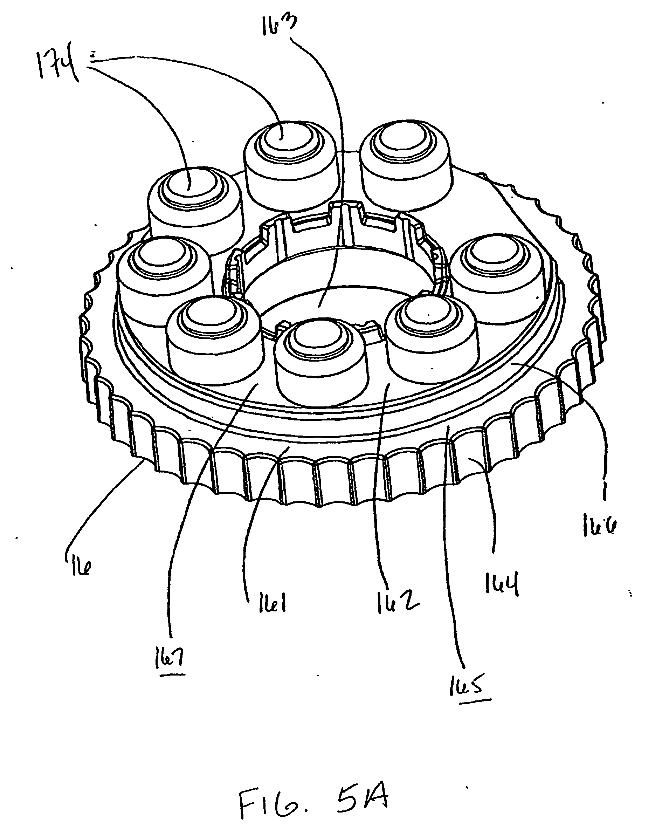

The landing 126 is preferably inclined as shown in Figure 4B to further aid in transitioning the product from the interior of the cover 12 to the landing 126. The landing 126 optionally comprises a magnetic component 130 secured to the landing 126 via a pressure sensitive adhesive. The magnetic component 130 aids in controlling and removably maintaining metallic products such as miniature batteries on the landing 126. Alternatively, as dictated by the product, other surfaces or materials, such as velcro or adhesives, may be utilized for controlling and removably maintaining products on the landing 126 as will be appreciated by those skilled in the art. These alternate surfaces or materials may comprise the entire landing 126 or may be secured to the landing 126 via an adhesive or other securing method. Further, the magnetic component 130 can be planar or otherwise shaped, and may be exposed or embedded within the landing. Where product use and placement permit, the landing 126 may further include a stop wall (not shown) at its distal end to further control the forward motion of the product as it transitions from the interior of the cover 12 to the landing 126. It should be appreciated that the landing 126 may be integral to the cover 12 or the base 16 or may be a separate component connected to either the cover 12 or the base 16.

The snap hook connectors 127a, 127b and 127c extend from the inner surface of the roof 121 and are positioned at 90 degree intervals around the roof opening 123. The connectors further comprise flexible angled lead-in surfaces 131 and flexible tension-providing surfaces 132. The lead-in surfaces 131 interact with the inner surface of the base opening during connection of the base with the cover, causing the snap hook connectors to flex inwardly, as will be more fully explained below. The tension-providing surfaces 132 maintain tension contact with the base upon completion of the connection process and the outward return flex of the snap hook connectors 127a, 127b and 127c. The number and positioning of the snap hook connectors is a matter of design choice and can be varied without departing from the scope of the within invention.

One of the snap hook connectors further comprises a rib 133. The rib 133 is positioned such that when the cover 12 or the base 16 is rotated, a stop point is created once the rib 133 engages a base turret groove 173. Each such stop point aligns a product and/or a product dispensing position with the wall opening 125 of the cover 12.

The outer surface of the cover wall 124 may be all or partially ribbed as illustrated or otherwise textured to provide a grip for the cover 12 during relative motion between the cover 12 and base 16. Additional gripping can be provided by extending the upper surface of the cover 12 outwardly beyond the cover wall 124 at one or more locations.

The push element 14 comprises a thumbpiece 141 having gripping ribs 142 or alternatively a textured surface secured to the upper surface of the thumbpiece 141 for gripping the push element 14. In a preferred embodiment, the push element is molded from a polystyrene material such as Styron 6075 manufactured by Dow Plastics and available from General Polymers, Columbus, OH 43216.

The push element 14 further comprises a projection 143. The projection 143 extends over at least a portion of the product located in the product dispensing position during transport and storage of the dispenser 10, to aid in maintaining the product in this position. The projection 143 further aids in controlling the movement ofproduct during transition from the interior of the cover 12 onto the landing 126, and in maintaining the position of individual product on the landing 126. Optionally, a lip 144 is located on the bottom surface of the projection 143 which aids in securing individual product in the product dispensing position and in position on the landing 126.

The push element 14 further comprises two slide rails 145 and a center rudder 146, both secured to the lower surface of the thumbpiece 141. The rudder 146 is aligned with a base turret opening 172 whenever the snap hook connector rib 133 is engaged with a base turret groove 173 to create a stop position for relative motion between the cover 12 and the base 16. Such alignment is required to allow the push element to be extended. When the push element 14 is fully retracted, the rudder 146 does not occupy the aligned base turret opening 172 and the base 16 and the cover 12 are free to move with respect to each other between stop positions. This fully retracted position will be referred to herein as the first position of the push element 14. At a stop position the push element 14 can be partially or fully extended, causing the rudder 146 to occupy the aligned base turret opening 172 thereby preventing motion between the base 16 and the cover 12 to an alternate stop position. This partial or full extension position will be referred to herein as the second position of the push element 14.

The rudder 146 further comprises a scraper 147 positioned at the front of the rudder. The scraper 147 is designed to separate individual product from the product dispensing position by interposing the scraper 147 between the product and the product dispensing position upon extension of the thumbpiece 141. In the case of an air cell, interposing the scraper 147 between the cell and the product dispensing position untabs the cell, allowing air ingress and cell activation.

It should be appreciated that the projection 143, the lip 144 and the scraper 147 may all be contoured to shape according to the product contained within the dispenser without departing from the teachings herein.

The slide rails 145 of the thumbpiece 141 comprise snap hooks having angled surfaces 148a and flat surfaces 148b. The angled surfaces 148a allow a portion of the push element 14 to pass through the roof opening 123 for snap connection of the push element with the cover 12. The angled surfaces 148a contact the sides of the roof opening during connection causing the snap hooks to flex inwardly. Once the angled surfaces 148a have cleared the roof opening 123, the snap hooks retract, thereby engaging the inner surface of the cover and the flat surfaces 148b of the snap hooks, enabling the push element to slidably extend and retract along the roof opening 123.

The push element 14 further comprises two stop walls 149 positioned on the lower surface of the thumbpiece 141. The stop walls 149 define a stop position for the fully extended push element 14 upon contacting the inside surface of the cover wall 124. In an alternative embodiment, the stop position for the fully extended push element 14 can be provided by extending the slide rails 145 so that they contact the inside surface of the cover wall 124 when the push element 14 is fully extended.

The base 16 comprises a lower tier 161, an upper tier 162 and a hollow center 163. The lower tier comprises an outer wall 164 and an upper surface 165. The upper tier further comprises an outer wall 166 and an upper surface 167. In a preferred embodiment, the base is molded from Styron 6075 as described above.

The lower tier upper surface 165 is sized to accommodate the width of the cover wall 124. When joined, the bottom surface of the cover wall 124 is in contact with the lower tier upper surface 165 and a portion of the inner surface of the cover wall 124 is in contact with the upper tier outer wall 166.

All or a portion of the lower tier outer wall 164 may be partially ribbed as shown or otherwise textured to provide a grip for the base 16 during relative motion between the cover 12 and base 16. Extensions (not shown) from the base may be included to provide handles to aid in separating the base 16 from the cover 12. The lower tier outer wall 164 may optionally include an indicator such as an arrow (not shown). Aligning the landing 126 with the indicator during connection of the cover and base also aligns the snap hook connector rib 133 of the cover 12 with a base turret groove 173, facilitating the connection.

The hollow center 163 further comprises a turret partition 169 defined by a beveled edge 170 and turret structures 171 extending above the upper tier upper surface 167. The turret structures 171 are separated by turret openings 172. The openings 172 are sized to permit the rudder 146 to occupy an opening during extension of the push element 14 in its second position. The lead in surfaces 131 of the cover snap hook connectors 127a-c contact the turret partition 169 during connection of the cover and base, causing the cover snap hook connectors to flex inwardly. Upon encountering the beveled edge 170 of the base hollow center 163, the snap hook connectors retract, allowing the tension-providing surfaces 132 of the cover snap hook connectors to contact the beveled edge and thereby secure the cover and base together.

The turrets 171 further comprise grooves 173 extending along the length of the partition 169. Insertion of the snap hook rib 133 of the cover into one of the turret grooves 173 defines a stop position whereby product located at the product dispensing position is aligned with the cover wall opening 125 and the landing 126.

Product is affixed to the upper tier upper surface 167 via adhesive or other suitable means. In a preferred embodiment of the within invention, zinc air miniature cells 174 are exemplified as the product, and are adhered to the base using an adhesive platform 175. The platform comprises at least one adhesive layer. In a preferred embodiment, the platform comprises a lower adhesive layer 176, a mid adhesive layer 177, an upper adhesive layer 178, a foam tape layer 179 sandwiched between the lower and mid adhesive layers, a mylar film layer 180 sandwiched between the mid and upper adhesive layers, and a polyester overcoat layer 181 located atop the upper adhesive layer. The lower and mid adhesive layers with a foam layer sandwiched in between are available as a single product, from Label Technologies Inc., Spec. #4105 (double sided closed cell foam with acrylic adhesive), Suwanee, Georgia. The mylar film layer and upper adhesive layer are also available as a single product from Label Technologies Inc., Spec. #72907 (polyolefin with R-143 adhesive). The polyester overcoat layer is available from Label Technologies Inc., Spec. #2216 (interfilm metalized polyester). Alternating cutouts 175a are provided in the overcoat layer 181 to expose portions of the underlying adhesive layer 178. The air cells 174 are placed upon the exposed adhesive portions to seal their associated air ports until such time as the cell is transferred from the interior of the cover to the landing. In a preferred embodiment, the cutouts are larger than the diameter of the cells, such that the cells do not come into direct contact with the overcoat layer. It will be appreciated that the overcoat layer 181 is an optional feature designed primarily to prevent the accumulation of dust and other debris on the upper adhesive layer 178 and to provide an aesthetically pleasing appearance. As such, it will be appreciated that other materials with an aesthetically appealing appearance, adequate adhesion to the underlying adhesive layer, and a surface that will avoid the accumulation of dust and debris could be used in place of the polyester overcoat layer 181.

In this embodiment, the air cells are not individually tabbed, thereby obviating the expense associated with such an operation. Further, the tabbing material remains with the dispenser when the cell is dispensed, avoiding the need to handle or otherwise dispose of an individual tab. It will be appreciated, however, that the dispenser of the within invention can be utilized with individually tabbed air cells. In such an embodiment, the tab is mechanically or adhesively joined to the base. The cell is then separated from the tab when the thumbpiece scraper is inserted between the tab and the cell. The cell is then advanced from the interior of the cover onto the landing while the tab remains attached to the dispenser base.

Individual tabbing of air cells can also be avoided using the within invention where one surface of a gasket sealing material is affixed with an appropriate adhesive to the upper tier surface 165 of the base. The opposing gasket surface then directly contacts the bottom of the cell. The cells are then sealed by placing sufficient downward pressure on the top of the cell from the cover rib 128 to effectively limit the amount of air ingress until such time as the cell is advanced to the product dispensing position. The pressure also secures the cells in position on the base until dispensed.

Other techniques and methods for adhering product to the base may also be used without departing from the teachings of the within invention. Adhesive to secure product may be applied as a surface coating to the upper tier upper surface 165, or alternatively, may be applied in discrete locations to coincide with the number and spacing of product on the upper surface of the upper tier. Adhesives appropriate to the type of product can be selected as is known in the art.

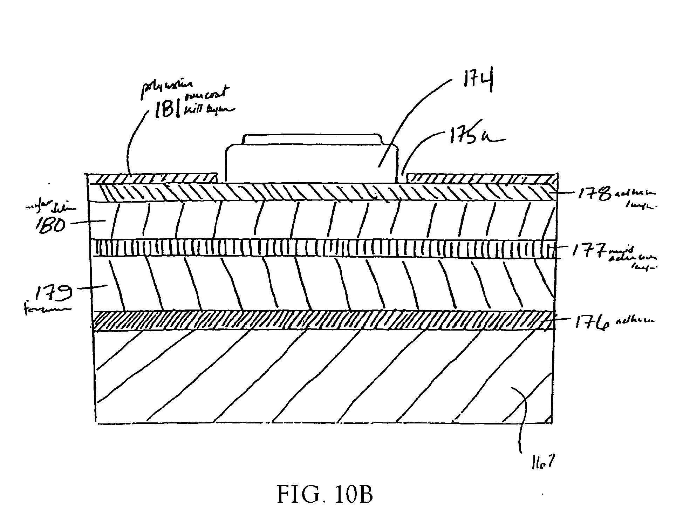

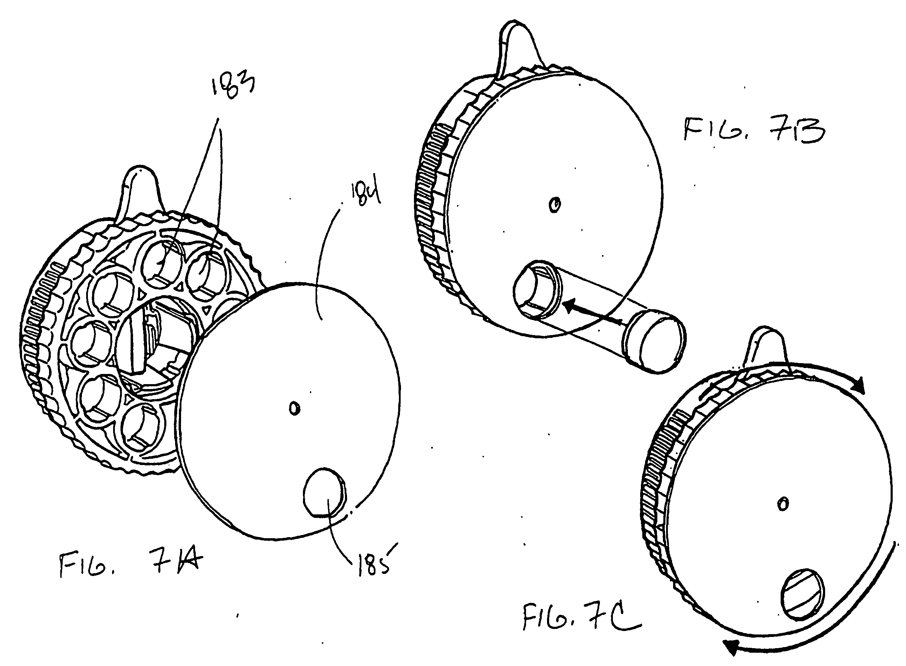

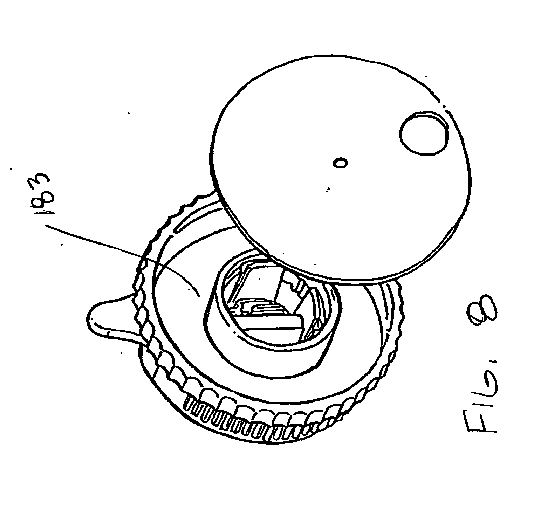

The underside of the base 16 optionally comprises a series of support ribs 182. In an alternate embodiment, the ribs define one or more storage compartments 183 for spent product. Where individual compartments are defined by such ribs, spent product can be secured in position using an interference fit between the product and the storage compartment. Alternatively, spent product can be secured into position by sealing the compartments with a rotatable covering 184 having an opening 185, as illustrated in figures 7a-c. The opening 185 could be aligned with an individual storage compartment to allow the spent air cells to pass through the opening into the compartment 183. In the event support ribs are not utilized, the void volume of the base can still function as a repository for spent product as illustrated in figure 8.

To operate the dispenser from the starting position, the push element 14 is placed in the first position, the fully retracted position. The cover 12 and base 16 are then rotated with respect to each other until a stop position is reached where product is located in the product dispensing position. The push element is then advanced to the fully extended position, causing the product to transition from the product dispensing position to the landing. At this point, the dispenser 10 may be used as a handle to orient the product and insert it correctly into a device.

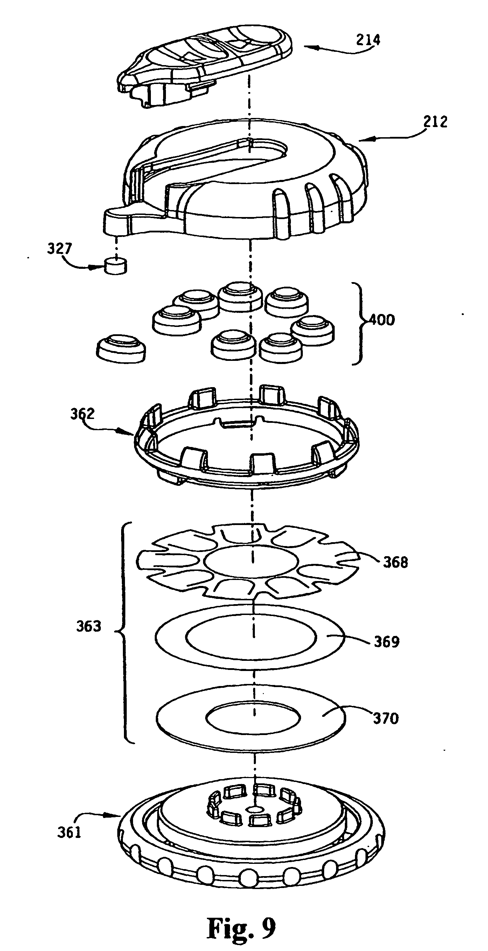

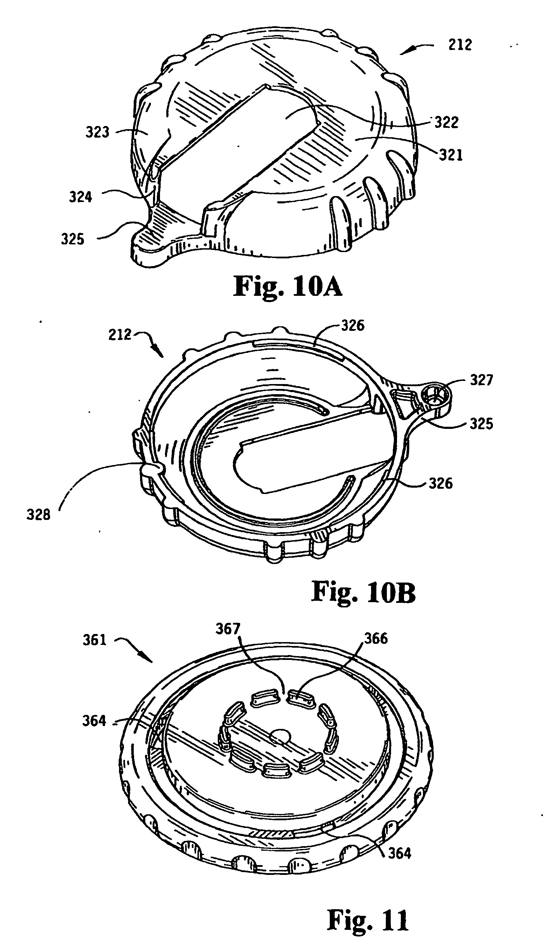

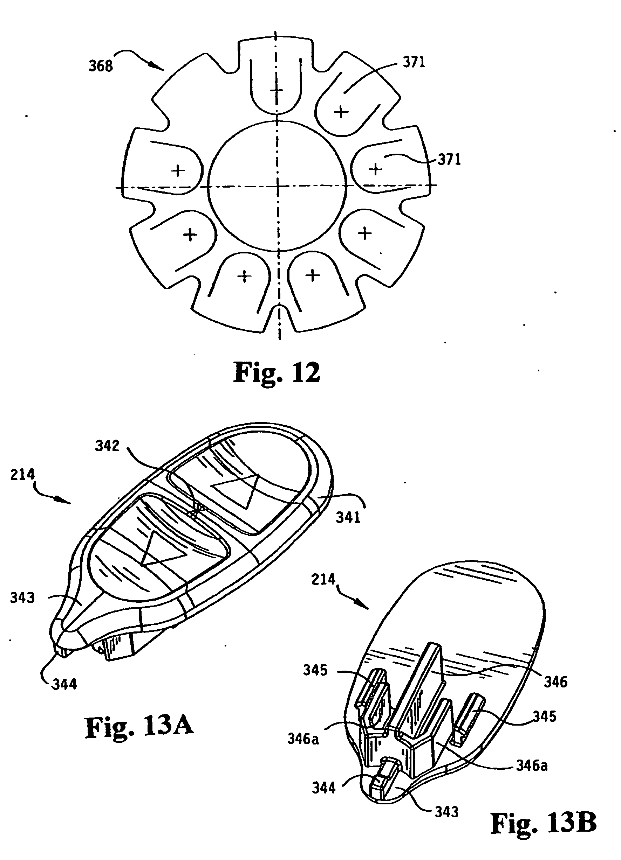

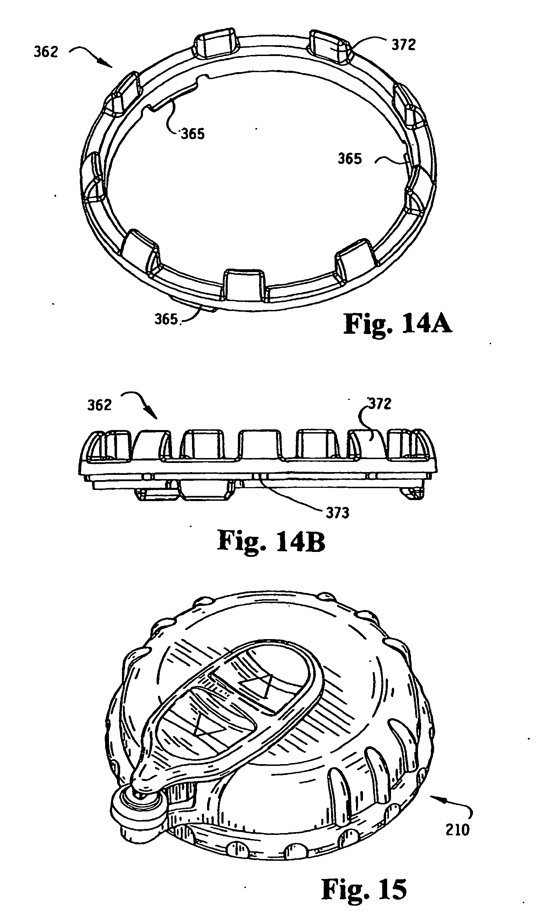

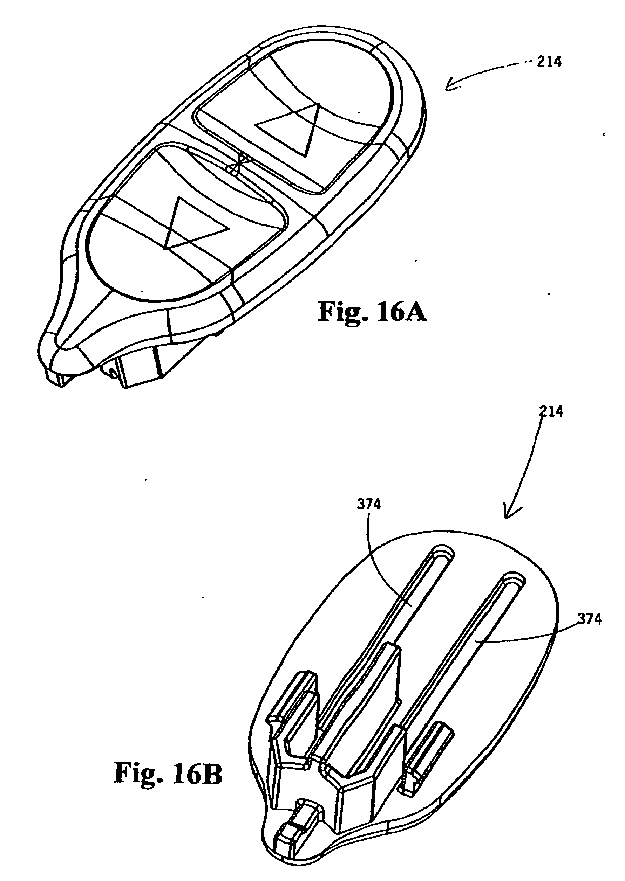

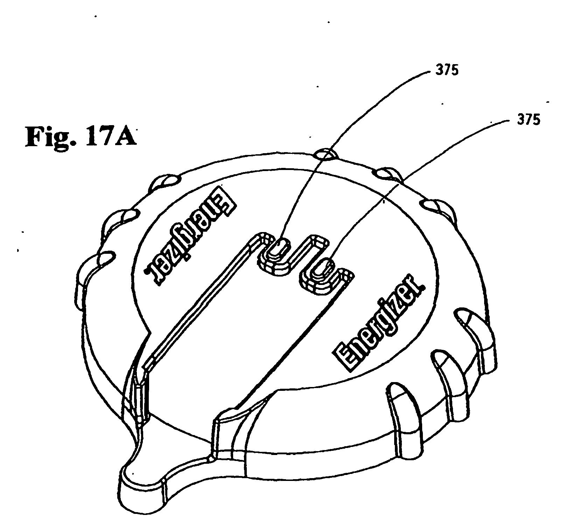

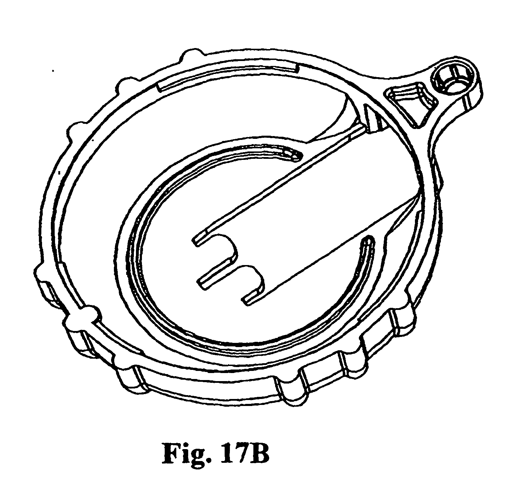

In an alternate embodiment of the dispenser of the within invention as depicted in Figures 9 through 17B, the dispenser 210 of the within invention comprises a cover 212, a retractable push element 214 and a base 216. The cover 212 and the base 216 are connected such that each can be rotated about a common axis with respect to the other. That is, the cover can be rotated while maintaining the base in a stationary position, or, conversely, the base can be rotated while maintaining the cover in a stationary position.

The rotatable cover 212 comprises a roof 321, a roof opening 322, a wall 323, a wall opening 324, a landing 325 and cover snap hook connectors 326. The cover 212 can be made from a readily-available, polycarbonate-based material such as Lexan® 143R resin manufactured by GE Plastics and available from Polymerland Service Center, Pittsburgh, PA 15264. It should be appreciated that other durable materials may be used in producing the cover 212.

The roof opening 322 is coincidental with the wall opening 324 and the landing 325 is secured to the cover 212 at a location adjacent to the wall opening 324. Product passes through the wall opening 324 from the interior of the cover 212 onto the landing 325. Product aligned at the wall opening 324 for such transition is said to be located in the product dispensing position.

The landing 325 is preferably inclined as shown to further aid in transitioning the product from the interior of the cover 212 to the landing 325. The landing 325 optionally comprises a magnetic component 327 embedded within the landing. Alternatively, the magnet can be secured to the landing surface via a pressure sensitive adhesive or otherwise affixed to the landing, as is known in the art. The magnetic component 327 aids in controlling and removably maintaining metallic products such as miniature batteries on the landing 325. Alternatively, as dictated by the product, other surfaces or materials, such as velcro or adhesives, may be utilized for controlling and removably maintaining products on the landing as will be appreciated by those skilled in the art. These alternate surfaces or materials may comprise the entire landing. Further, the magnetic component 327 can be planar or otherwise shaped. Where product use and placement permit, the landing 325 may further include a stop wall (not shown) at its distal end to further control the forward motion of the product as it transitions from the interior of the cover 212 to the landing 325. It should be appreciated that the landing 325 may be integral to either the cover 212 or the base 216 or may be a separate component connected to either the cover 212 or the base 216.

The snap hook connectors 326 extend inwardly from the inner surface of the cover 212 and are positioned at regular intervals around the interior perimeter of the cover 212. The connectors interact with the base ring 362 during connection of the base ring with the cover as will be more fully explained below and maintain tension contact with the base ring upon completion of the connection process. The number, shape and positioning of the snap hook connectors is a matter of design choice and can be varied without departing from the scope of the within invention.

The outer surface of the cover wall 323 may be all or partially ribbed as illustrated or otherwise textured to provide a grip for the cover 212 during relative motion between the cover 212 and base 216. Additional gripping can be provided by extending the upper surface of the cover 212 outwardly beyond the cover wall 323 at one or more locations.

The push element 214 comprises a thumbpiece 341 having a gripping rib 342 or alternatively a textured surface secured to the upper surface of the thumbpiece 341 for gripping the push element 214. The push element can be molded from a polystyrene material such as Styron 6075 manufactured by Dow Plastics and available from General Polymers, Columbus, OH 43216, or such other suitable material as is known in the art.

The push element 214 further comprises a projection 343. The projection 343 extends over at least a portion of the product located in the product dispensing position during transport and storage of the dispenser 210, to aid in maintaining the product in this position. The projection 343 further aids in controlling the movement of product during transition from the interior of the cover 212 onto the landing 325, and in maintaining the position of individual product on the landing 325. Optionally, a lip 344 is located on the bottom surface of the projection 343 which aids in securing individual product in the product dispensing position and in position on the landing 325.

The push element 214 further comprises two slide rails 345 and a central rudder 346 and two side rudders 346a secured to the lower surface of the thumbpiece 341. When the rudder 346 aligns with a base platform turret opening 367 in the fully retracted position of the push element, the push element 214 can be extended to advance product onto the landing 325. Extension of the push element causes the center rudder 346 to occupy a base platform turret opening 367, preventing rotation of the base 216 with respect to the cover 212. When the push element 214 is fully retracted, the rudder 346 does not occupy a base platform turret opening 367 and the base 216 and the cover 212 are free to move with respect to each other, enabling product to be located in the product dispensing position. Movement of the push element 214 is further controlled by upper projections 372 on base ring 362. When the push element is extended to advance product onto the landing 325, side rudders 346a occupy an opening between upper projections 372, thereby preventing rotation of the cover and base with respect to each other.

The slide rails 345 maintain a snap connection between the push element 214 and the cover 212 and cooperate with the surfaces of the roof opening 322 to allow the push element to move along the roof opening.

It should be appreciated that the projection 343 and the lip 344 may be contoured to shape according to the product contained within the dispenser without departing from the teachings herein.

The slide rails 345 comprise snap hooks to provide a snap connection between the push element and the cover 212 while enabling the push element to slidably extend and retract along the roof opening 322. The slide rails 345 contact the inside surface of the cover wall 323 preventing further extension and defining the fully extended push element position.

The base 216 comprises a base platform 361, a base ring 362 and a product platform 363. The base platform 361 comprises openings 364 at regularly spaced intervals that cooperate with extensions 365 on the base ring 362 to provide a snap connection between the base platform 361 and the base ring 362. The base platform 161 further comprises turret extensions 166 defining turret openings 167 arranged in a concentric circle, to control the movement of the push element 214 as explained above.

All or a portion of the base platform 361 may be ribbed as shown or otherwise textured to provide a grip for the base 216 during relative motion between the cover 212 and base 216. Extensions (not shown) from the base may be included to provide handles to aid in separating the base 216 from the cover 212.

Product is fixed onto the product platform 363 via adhesive or other suitable means. In a preferred embodiment of the within invention, zinc air miniature cells 400 are exemplified as the product, and the adhesive product platform comprises an adhesive tab layer 368, a kill liner layer 369 and an adhesive foam layer 370. The tab layer 368 has an adhesive upper surface and comprises precut tab areas 371. Air cells 400 are positioned onto the adhesive surface at the tab areas 371, thereby preventing the ingress of air sufficient to activate the cells prior to dispensing the cells from the dispenser 210. A kill liner layer 369 is positioned between the tab layer 368 and the foam layer 370. The function of the kill liner layer 369 is to selectively block the upper adhesive surface of the foam layer 370 from contacting selected portions of the lower surface of the tab layer 368 and is shaped accordingly. A mylar film suitable for this function can be selected as is known in the art. In this way only a portion of the precut tab areas 371 are adhesively secured to the foam layer 369 prior to dispensing the cell, enabling a measure of control over the amount of force required to separate the cell from the tab as the cell is advanced by the push element from the interior of the dispenser to the dispenser landing. The foam layer and the tab layer are available from Label Technologies, Suwanee, Georgia.

In an alternate embodiment, the kill liner layer can be eliminated by selectively applying an adhesive to only those portions of the upper surface of the foam layer 370 where adhesive contact with the lower surface of the tab layer 368 is desired. In another embodiment, selective application of adhesive is accomplished in only those portions of the upper surface of the tab layer 368 where adhesive contact with the product is desired.

The product platform 363 is further joined to the base platform 361 via the snap connection between the base ring 362 and the base platform 361. The base ring 362 comprises a lip about the perimeter to capture the outer perimeter of the tab layer 368, and lower extensions 365 spaced about the perimeter that cooperate with openings 364 in the base platform to provide a snap connection. The base ring 362 further comprises grooves 373 preferentially corresponding in number to the number of product positions in the dispenser. The grooves 373 cooperate with a boss 328 located on a cover snap hook connector 326 to define a stop position during rotation of the base and cover with respect to each other. The stop position effectively aligns the push element 214 with product in the product dispensing position.

The base ring 362 captures the outer perimeter of the tab layer 368 during assembly of the dispenser, aiding in the separation of the cell from the precut tab areas and in the retention of the precut tab areas with the dispenser as the cell is advanced off of the precut tab areas in transition from the interior of the dispenser to the landing 325.

In this embodiment, the air cells are not individually tabbed with discrete tabs, thereby obviating the expense associated with such an operation. Further, the tabbing material layer remains with the dispenser when the cell is dispensed, avoiding the need to handle or otherwise dispose of an individual tab. It will be appreciated, however, that the dispenser of the within invention can be utilized with individually tabbed air cells. In such an embodiment, the discrete tab is mechanically or adhesively joined to the base. The cell is then separated from the tab when the cell is advanced from the interior of the cover onto the landing while the tab remains attached to the dispenser base.

Other techniques and methods for adhering product to the base may also be used without departing from the teachings of the within invention. Adhesive to secure product may be applied as a surface coating to the upper surface of the base platform 361, or alternatively, may be applied in discrete locations to coincide with the number and spacing of product on the upper surface, thereby obviating the need for discrete adhesive layer 368, kill liner layer 369 and foam adhesive layer 370. Adhesives appropriate to the type of product can be selected as is known in the art.

In another aspect of this embodiment of the within invention, the dispenser can be reused by discarding all or a portion of the base 216 once all of the product has been completely dispensed. A refill kit, comprising fresh product to be dispensed using the dispenser on a replacement base 216 is provided for re-introduction into the dispenser for use with the original cover 212 and push element 214.

In an alternate embodiment of the within invention, additional stability is provided to the push element 214 as it transitions between its fully extended and fully retracted positions by additional grooves 374 positioned on the underside of the push element 214. These grooves 374 cooperate with projections 375 positioned on the cover 212. It will be appreciated that the grooves 374 could alternatively be located on the cover 212 and the projections 375 be located on the push element 214 without departing from the scope of the within invention.

The underside of the base 216 optionally comprises a series of storage compartments (not shown) for spent product. Spent product can be secured in position using an interference fit between the product and the storage compartment. Alternatively, spent product can be secured into position by sealing the compartments with a rotatable covering (not shown) having an opening aligned with an individual storage compartment to allow the spent air cells to pass through the opening into the compartment.

## Claims

1. A dispenser (10) for transporting, housing and dispensing product, said dispenser comprising:
a cover (12) comprising a wall (124), a wall opening (125), a roof (121) and a longitudinal opening (123) in said roof;
a push element (14) slidably engaged along the roof opening (123);
a base (16); and
a landing (126) for removably retaining product,
wherein said cover (12) and said base (16) are rotatable with respect to each other about a common axis, **characterized in that** the roof opening (123), the wall opening (125) and the landing (126) are alignable to enable the product to be advanced from the interior of the cover (12) through the wall opening (125) and onto the landing (126) by the push element (14) and that the push element (14) is slidably engaged along the longitudinal axis of the roof opening (123).

2. The dispenser (10) of claim 1, wherein the push element (14) has a first position in which said element is fully retracted and a second position in which said element is partially or fully extended.

3. The dispenser (10) of claim 2, wherein said cover (12) further comprises at least one frictional engagement structure contacting the push element (14) when said element is in the second position.

4. The dispenser (10) of claim 3, wherein said at least one frictional engagement structure (22) contacts the push element (14) during the first position of said element.

5. The dispenser (10) of claim 2, wherein said cover (12) and base (14) are only rotatable with respect to each other when said push element (14) is in the first position.

6. The dispenser (10) of claim 1, wherein said landing (126) is inclined from the plane of the base (16).

7. The dispenser (10) of claim 1, wherein said landing (126) further comprises a magnet (130).

8. The dispenser (10) of claim 7, wherein said magnet (130) is exposed.

9. The dispenser (10) of claim 7, wherein said magnet (130) is embedded within said landing (126).

10. The dispenser (10) of claim 8, wherein said magnet (130) comprises a planar surface.

11. The dispenser (10) of claim 1, wherein said base (16) further comprises an adhesive platform.

12. The dispenser (10) of claim 11, wherein said platform comprises a plurality of adhesive layers (176, 177, 178).

13. The dispenser (10) of claim 12, wherein said outermost adhesive layer (178) is covered with an overcoat layer (181) with one or more cutouts exposing the underlying adhesive.

14. The dispenser (10) of claim 11, further comprising one or more products secured to the platform.

15. The dispenser (10) of claim 12, further comprising one or more products secured to the platform.

16. The dispenser (10) of claim 13, further comprising one or more products secured to the platform.

17. The dispenser (10) of claim 1, further comprising one or more products secured to the base (16) with an adhesive applied to discrete locations of the base (16).

18. The dispenser (10) of claim 1 wherein said cover can be removably connected with said base (16).

19. The dispenser (10) of claim 18, said cover (12) further comprising at least one snap hook connector (326).

20. The dispenser (10) of claim 19, said snap hook connector (326) further comprising a rib.

21. The dispenser (10) of claim 20, the base further comprising a ridge and spaced turrets, said turrets (171) further comprising grooves (173).

22. The dispenser (10) of claim 21, wherein upon connection of said cover (12) and said base (16), said snap hook connector (326) engages said ridge and said snap hook connector rib engages said turret groove (173).

23. The dispenser (10) of claim 22, said push element (14) further comprising a rudder (146, 346) that prevents rotation of said base (16) with respect to said cover (12) when said rudder (146, 346) occupies the space between said turrets(171).

24. The dispenser (10) of claim 1, wherein said landing (126) is integral with said cover (12).

25. The dispenser (10) of claim 1, wherein said landing (126) is integral with said base (16).

26. The dispenser (10) of claim 1, wherein said base (16) further comprises at least one storage compartment (183).

27. The dispenser (10) of claim 26, wherein said base (16) further comprises a cover (184) over said storage compartment (183).

28. The dispenser (10) of claim 27, wherein said storage compartment cover (184) is rotatable with respect to said base and further comprises at least one opening (185)

29. The dispenser (10) of claim 27, wherein said cover (12) comprises at least one opening.

30. The dispenser (10) of claim 1, wherein said cover (12) further comprises a rib along at least a portion of the inner surface of said cover (12).

31. The dispenser (10) of claim 30, said base (16) further comprising a gasket layer secured on one side to said base (16).

32. A dispenser (10) of claim 1 further comprising a base ring (362).

33. The dispenser (10) of claim 32, wherein the dispenser (10) further comprises an adhesive layer (370) disposed between said base ring (362)and said base platform (361).

34. The dispenser (10) of claim 33, wherein the adhesive layer (370) further comprises at least one precut tab area (371).

35. The dispenser (10) of claim 34, wherein the dispenser (10) further comprises a foam layer disposed between said base platform (361) and said adhesive layer (370).

36. The dispenser (10) of claim 35, wherein the base ring (362) encloses the outer perimeter of the adhesive layer (370).

37. The dispenser (10) of claim 32, wherein said cover further comprises at least one projection (375) and said push element (14) further comprises at least one groove (374), wherein said projection (375) moves within said groove (374) during at least a portion of the transition of the push element (14) from a fully extended position to a fully retracted position.

## Patentansprüche

1. Ausgabevorrichtung (10) zum Transportieren, Aufnehmen und Ausgeben eines Produkts, wobei die Ausgabevorrichtung aufweist:
ein Abdeckteil (12) mit einer Wand (124), einer Wandöffnung (125), einem Dach (121) und einer längsverlaufenden Öffnung (123) in dem Dach;
ein Schiebeelement (14), das gleitend in die Dachöffnung (123) eingreift;
ein Basisteil (16); und
einen Vorsprung (126) zum lösbaren Festhalten des Produkts,
wobei das Abdeckteil (12) und das Basisteil (16) relativ zueinander um eine gemeinsame Achse drehbar sind,
**dadurch gekennzeichnet, dass**
die Dachöffnung (123), die Wandöffnung (125) und der Vorsprung (126) miteinander ausrichtbar sind, um ein Vorwärtsbewegen des Produkts mittels des Schiebeelements (14) aus dem Inneren des Abdeckteils (12) durch die Wandöffnung (125) und auf den Vorsprung (126) zu ermöglichen, und dass das Schiebeelement (14) gleitend entlang der Längsachse der Dachöffnung (123) eingreift.

2. Ausgabevorrichtung (10) nach Anspruch 1, bei der das Schiebeelement (14) eine erste Position aufweist, in der das Element vollständig zurückgezogen ist, und eine zweite Position aufweist, in der das Element teilweise oder vollständig ausgefahren ist.

3. Ausgabevorrichtung (10) nach Anspruch 2, bei der das Abdeckteil (12) ferner mindestens eine reibend angreifende Struktur aufweist, die das Schiebelement (14) berührt, wenn sich das Element in der zweiten Position befindet.

4. Ausgabevorrichtung (10) nach Anspruch 3, bei der die mindestens eine reibend angreifende Struktur (22) das Schiebeelement (14) in der ersten Position des Elements berührt.

5. Ausgabevorrichtung (10) nach Anspruch 2, bei der das Abdeckteil (12) und das Basisteil (16) nur dann relativ zueinander drehbar sind, wenn sich das Schiebeelement (14) in der ersten Position befindet.

6. Ausgabevorrichtung (10) nach Anspruch 1, bei der der Vorsprung (126) aus der Ebene des Basisteils (16) heraus geneigt ist.

7. Ausgabevorrichtung (10) nach Anspruch 1, bei der der Vorsprung (126) ferner einen Magneten (130) aufweist.

8. Ausgabevorrichtung (10) nach Anspruch 7, bei der der Magnet (130) frei liegt.

9. Ausgabevorrichtung (10) nach Anspruch 7, bei der der Magnet (130) in dem Vorsprung (126) eingebettet ist.

10. Ausgabevorrichtung (10) nach Anspruch 8, bei der der Magnet (130) eine planare Fläche aufweist.

11. Ausgabevorrichtung (10) nach Anspruch 1, bei der das Basisteil (16) ferner eine Klebe-Plattform aufweist.

12. Ausgabevorrichtung (10) nach Anspruch 11, bei der die Plattform mehrere Klebeschichten (176,177,178) aufweist.

13. Ausgabevorrichtung (10) nach Anspruch 12, bei der die äußerste Klebeschicht (178) mit einer Deckschicht (181) abgedeckt ist, wobei ein oder mehrere Ausschnitte den darunter liegenden Kleber freilegen.

14. Ausgabevorrichtung (10) nach Anspruch 11, ferner mit einem oder mehreren an der Plattform befestigten Produkten.

15. Ausgabevorrichtung (10) nach Anspruch 12, ferner mit einem oder mehreren an der Plattform befestigten Produkten.

16. Ausgabevorrichtung (10) nach Anspruch 13, ferner mit einem oder mehreren an der Plattform befestigten Produkten.

17. Ausgabevorrichtung (10) nach Anspruch 1, ferner mit einem oder mehreren an dem Basisteil (16) befestigten Produkten, wobei ein Kleber an diskreten Stellen des Basisteils (16) aufgebracht ist.

18. Ausgabevorrichtung (10) nach Anspruch 1, bei der das Abdeckteil lösbar mit dem Basisteil (16) verbunden sein kann.

19. Ausgabevorrichtung (10) nach Anspruch 18, bei der das Abdeckteil (12) ferner mindestens ein Einrasthaken-Verbindungsteil (326) aufweist.

20. Ausgabevorrichtung (10) nach Anspruch 19, bei der das Einrasthaken-Verbindungsteil (326) ferner eine Rippe aufweist.

21. Ausgabevorrichtung (10) nach Anspruch 20, bei der das Basisteil ferner eine Leiste und voneinander beabstandete Erhebungen aufweist, wobei die Erhebungen (171) ferner mit Nuten (173) versehen sind.

22. Ausgabevorrichtung (10) nach Anspruch 21, bei der bei Verbindung des Abdeckteils (12) mit dem Basisteil (16) das Einrasthaken-Verbindungsteil (326) an der Leiste angreift und die Rippe des Einrasthaken-Verbindungsteils in die Erhebungs-Nut (173) eingreift.

23. Ausgabevorrichtung (10) nach Anspruch 22, bei der das Schiebeelement (14) ferner ein ruderförmiges Teil (146,346) aufweist, das ein Drehen des Basisteils (16) relativ zu dem Abdeckteil (12) verhindert, wenn das ruderförmige Teil (146,346) den Platz zwischen den Erhebungen (171) einnimmt.

24. Ausgabevorrichtung (10) nach Anspruch 1, bei der der Vorsprung (126) einstückig mit dem Abdeckteil (12) ausgebildet ist.

25. Ausgabevorrichtung (10) nach Anspruch 1, bei der der Vorsprung (126) einstückig mit dem Basisteil (16) ausgebildet ist.

26. Ausgabevorrichtung (10) nach Anspruch 1, bei der das Basisteil (16) ferner mindestens eine Aufnahmekammer (183) aufweist.

27. Ausgabevorrichtung (10) nach Anspruch 26, bei der das Basisteil (16) ferner ein Abdeckteil (184) über der Aufnahmekammer (183) aufweist.

28. Ausgabevorrichtung (10) nach Anspruch 27, bei der die Aufnahmekammer-Abdeckung (184) relativ zu dem Basisteil drehbar ist und ferner mindestens eine Öffnung (185) aufweist.

29. Ausgabevorrichtung (10) nach Anspruch 27, bei der das Abdeckteil (12) mindestens eine Öffnung aufweist.

30. Ausgabevorrichtung (10) nach Anspruch 1, bei der das Abdeckteil (12) ferner eine Rippe entlang einem Teil der Innenfläche des Abdeckteils (12) aufweist.

31. Ausgabevorrichtung (10) nach Anspruch 30, bei der das Basisteil (16) ferner eine an einer Seite des Basisteils (16) befestigte Dichtungsschicht aufweist.

32. Ausgabevorrichtung (10) nach Anspruch 1, ferner mit einem Basisteil-Ring (362).

33. Ausgabevorrichtung (10) nach Anspruch 32, wobei die Ausgabevorrichtung (10) ferner eine Klebeschicht (370) zwischen dem Basisteil-Ring (362) und der Basisteil-Plattform (361) aufweist.

34. Ausgabevorrichtung (10) nach Anspruch 33, bei der die Klebeschicht (370) ferner mindestens einen vorgeschnittenen Laschenbereich (371) aufweist.

35. Ausgabevorrichtung (10) nach Anspruch 34, wobei die Ausgabevorrichtung (10) ferner eine Schaumschicht zwischen der Basisteil-Plattform (361) und der Klebeschicht (370) aufweist.

36. Ausgabevorrichtung (10) nach Anspruch 35, bei der der Basisteil-Ring (362) den Außenumfang der Klebeschicht (370) umschließt.

37. Ausgabevorrichtung (10) nach Anspruch 32, bei der das Abdeckteil ferner mindestens einen Ansatz (375) aufweist und das Schiebeelement (14) ferner mindestens eine Nut (374) aufweist, wobei sich der Ansatz (375) bei mindestens einem Teil des Übergangs des Schiebeelements (14) von einer vollständig ausgefahrenen Position in eine vollständig zurückgezogene Position in der Nut (374) bewegt.

## Revendications

1. Distributeur (10) pour transporter, loger et distribuer des articles, ledit distributeur comprenant :
un couvercle (12) comprenant une paroi (124), une ouverture (125) de paroi et un toit (121) et une ouverture longitudinale (123) dans ledit toit,
un élément pousseur (14) engagé de manière coulissante le long de l'ouverture (123) de toit,
une base (16), et
un palier (126) pour retenir l'article de manière amovible,
dans lequel ledit couvercle (12) et ladite base (16) peuvent tourner l'un par rapport à l'autre autour d'un axe commun, **caractérisé en ce que** l'ouverture (123) de toit, l'ouverture (125) de paroi et le palier (126) peuvent être alignés pour permettre à l'article d'être avancé depuis l'intérieur du couvercle (12) à travers l'ouverture (125) de paroi et sur le palier (126) par l'élément pousseur (14) et **en ce que** l'élément pousseur (14) est engagé de manière coulissante le long de l'axe longitudinal de l'ouverture (123) de toit.

2. Distributeur (10) de la revendication 1, dans lequel l'élément pousseur (14) a une première position dans laquelle ledit élément est complètement rétracté et une deuxième position dans laquelle ledit élément est partiellement ou totalement étendu.

3. Distributeur (10) de la revendication 2, dans lequel ledit couvercle (12) comprend en outre au moins une structure d'engagement frictionnel entrant en contact avec l'élément pousseur (14) quand ledit élément est dans la deuxième position.

4. Distributeur (10) de la revendication 3, dans lequel au moins une structure d'engagement frictionnel (122) entre en contact avec l'élément pousseur (14) pendant la première position dudit élément.

5. Distributeur (10) de la revendication 2, dans lequel ledit couvercle (12) et ladite base (14) ne peuvent tourner l'un par rapport à l'autre que quand ledit élément pousseur (14) est dans la première position.

6. Distributeur (10) de la revendication 1, dans lequel ledit palier (126) est incliné par rapport au plan de la base (16).

7. Distributeur (10) de la revendication 1, dans lequel ledit palier (126) comprend en outre un aimant (130).

8. Distributeur (10) de la revendication 7, dans lequel ledit aimant (130) est exposé.

9. Distributeur (10) de la revendication 7, dans lequel ledit aimant (130) est encastré dans ledit palier (126).

10. Distributeur (10) de la revendication 7, dans lequel ledit aimant (130) comprend une surface plane.

11. Distributeur (10) de la revendication 1, dans lequel ladite base (16) comprend en outre une plateforme adhésive.

12. Distributeur (10) de la revendication 11, dans lequel ladite plateforme comprend une pluralité de couches adhésives (176, 177, 178).

13. Distributeur (10) de la revendication 12, dans lequel ladite couche adhésive le plus à l'extérieur (178) est couverte d'une couche de revêtement (181) avec une ou plusieurs découpes exposant l'adhésif sous-jacent.

14. Distributeur (10) de la revendication 11, comprenant en outre un ou plusieurs articles fixés à la plateforme.

15. Distributeur (10) de la revendication 12, comprenant en outre un ou plusieurs articles fixés à la plateforme.

16. Distributeur (10) de la revendication 13, comprenant en outre un ou plusieurs articles fixés à la plateforme.

17. Distributeur (10) de la revendication 1, comprenant en outre un ou plusieurs articles fixés à la base (16) avec un adhésif appliqué à des endroits discrets de la base (16).

18. Distributeur (10) de la revendication 1, dans lequel ledit couvercle peut être connecté de manière amovible à ladite base (16).

19. Distributeur (10) de la revendication 18, ledit couvercle (12) comprenant en outre au moins un connecteur à encliquetage (326).

20. Distributeur (10) de la revendication 19, ledit connecteur à encliquetage (326) comprenant en outre une nervure.

21. Distributeur (10) de la revendication 20, ladite base comprenant en outre un sillon et des tourelles espacées, les tourelles (171) comprenant en outre des gorges (173).

22. Distributeur (10) de la revendication 21, dans lequel au moment de la connexion dudit couvercle (12) et de ladite base (16), ledit connecteur à encliquetage (326) s'engage dans ledit sillon et la nervure dudit connecteur à encliquetage s'engage dans la gorge (173) de la tourelle.

23. Distributeur (10) de la revendication 22, ledit élément pousseur (14) comprenant en outre un gouvernail (146, 346) qui empêche la rotation de ladite base (16) par rapport audit couvercle (12) quand ledit gouvernail (146, 346) occupe l'espace entre lesdites tourelles (171).

24. Distributeur (10) de la revendication 1, dans lequel ledit palier (126) fait partie intégrante dudit couvercle (12).

25. Distributeur (10) de la revendication 1, dans lequel ledit palier (126) fait partie intégrante de ladite base (16).

26. Distributeur (10) de la revendication 1, dans lequel ladite base (16) comprend en outre au moins un compartiment de stockage (183).

27. Distributeur (10) de la revendication 26, dans lequel ladite base (16) comprend en outre un couvercle (184) au-dessus dudit compartiment de stockage (183).

28. Distributeur (10) de la revendication 27, dans lequel ledit couvercle (184) du compartiment de stockage peut tourner par rapport à ladite base et comprend en outre au moins une ouverture (185).

29. Distributeur (10) de la revendication 27, dans lequel ledit couvercle (12) comprend au moins une ouverture.

30. Distributeur (10) de la revendication 1, dans lequel ledit couvercle (12) comprend en outre une nervure le long d'au moins une partie de la surface intérieure dudit couvercle (12).

31. Distributeur (10) de la revendication 30, comprenant en outre une couche d'étanchéité fixée à un côté de ladite base (16).

32. Distributeur (10) de la revendication 1, comprenant en outre un anneau de base (362).

33. Distributeur (10) de la revendication 32, dans lequel le distributeur (10) comprend en outre une couche adhésive (370) disposée entre ledit anneau de base (362) et ladite plateforme de base (361).

34. Distributeur (10) de la revendication 33, dans lequel la couche adhésive (370) comprend en outre au moins une zone de languettes prédécoupées (371).

35. Distributeur (10) de la revendication 34, dans lequel le distributeur (10) comprend en outre une couche de mousse disposée entre ladite plateforme de base (361) et ladite couche adhésive (370).

36. Distributeur (10) de la revendication 35, dans lequel l'anneau de base (362) entoure le périmètre extérieur de la couche adhésive (370).

37. Distributeur (10) de la revendication 32, dans lequel ledit couvercle comprend en outre au moins une protubérance (375) et ledit élément pousseur (14) comprend en outre au moins une gorge (374), dans lequel ladite protubérance (375) se meut dans ladite gorge (374) pendant au moins une partie de la transition de l'élément pousseur (14) d'une position totalement étendue à une position totalement rétractée.
